(19) Europäisches Patentamt

European Patent Office

Office européen des brevets

(11) **EP 0 643 285 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int. Cl.$^7$: **G01D 5/244**, G01P 13/04

(21) Anmeldenummer: **94111433.2**

(22) Anmeldetag: **22.07.1994**

(54) **System zur Messung der Absolutposition des beweglichen, zyklischen Teilungsmarken-Trägers eines inkrementalen Positionsgebers**

System for measuring the absolute position of the movable periodic scale of an incremental encoder

Système de mesure de la position absolue de l'échelle mobile et périodique d'un codeur incrémental

(84) Benannte Vertragsstaaten:
**AT CH DE ES FR GB IT LI**

(30) Priorität: **14.09.1993 DE 4331151**

(43) Veröffentlichungstag der Anmeldung:
**15.03.1995 Patentblatt 1995/11**

(73) Patentinhaber:
**BAUMÜLLER NÜRNBERG GMBH
D-90482 Nürnberg (DE)**

(72) Erfinder:
**Götz, Fritz Rainer, Dr. Ing.
D-90522 Oberasbach (DE)**

(74) Vertreter:
**Götz, Georg, Dipl.-Ing. et al
Götz, Küchler, Dameron
Patent- und Rechtsanwälte
Postfach 11 93 40
90103 Nürnberg (DE)**

(56) Entgegenhaltungen:
**EP-A- 0 450 829          DE-A- 4 100 666
US-A- 5 202 842**

• **R. D. Klug: "Echtzeitsimulation mechanischer Lastsysteme zur Prüfung elektrischer Servoantriebe", Dissertation an der Universität Erlangen-Nürnberg, 1992**

**Beschreibung**

Die Erfindung betrifft ein Verfahren und eine Vorrichtung zur Messung der Absolutposition des beweglichen, zyklischen Teilungsmarken-Trägers eines inkrementalen Positionsgebers oder Drehmelders innerhalb und/oder bezüglich eines seiner Teilungssegmente, die periodisch von den Teilungsmarken auf dem Träger gebildet und/oder begrenzt sind, wobei die Messung mit zwei gegenüber dem Träger ortsfest angeordneten und auf die Teilungsmarken ansprechenden Abtastelementen erfolgt, die einen etwa einem Viertel der Teilungssegmentlänge entsprechenden Abstand voneinander aufweisen, so daß sie näherungsweise zwei wie Sinus und Cosinus phasenverschobene Meßsignale erzeugen. Diese können dann von einer die Meßsignale aufnehmenden Auswerteeinheit eines Rechensystems zur Ermittlung der Absolutposition anhand einer Arkustangens-Funktion ausgewertet werden.

Bei bekannten zyklisch-absoluten Positionsgebern der eingangs genannten Art werden Markenteilungen (Abstand von Marke zu Marke) abgetastet, die auf einem drehbaren, rotationssymmetrischen oder linearen, längsverschiebbaren Teilungsmarken-Träger ausgebildet sein können. Die Teilung kann, wie an sich bekannt, durch magnetische und nicht-magnetische, optisch durchsichtige und undurchsichtige Segmente oder durch Zähne und Zahnlücken (auf einem Zahnrad oder einer Zahnstange), die jeweils abwechselnd aufeinander folgen, realisiert sein. Am Ausgang der entsprechenden Abtastelemente erhält man eine Folge von Strom- oder Spannungsimpulsen, deren Anzahl (Inkremente) einem groben Winkel- oder Längenpositionswert entspricht.

Um die Auflösung zu erhöhen, ist es ferner bekannt (vgl. Rolf-Dieter Klug "Echtzeitsimulation mechanischer Lastsysteme zur Prüfung elektrischer Servoantriebe", Dissertation an der technischen Fakultät der Universität Erlangen-Nürnberg, 1992, insbesondere Seiten 99 - 131), die Absolutposition innerhalb eines Teilungssegmentes (Inkrementes) über eine Arkus-Tangens-Funktion zu berechnen, nachdem die Sinus- und Cosinusfunktionen der Meßsignale durcheinander geteilt worden sind. In einem Mikrorechner können dann die Anzahl der gezählten Teilungsmarken bzw. -segmente und die Absolutposition zur Gesamtposition gemäß bekannter, mathematischer Beziehung kombiniert werden.

Allerdings ergibt die schlechte Signalqualität der Sinus- und Cosinusmeßsignale der bekannten Geber nach dem zyklisch-absoluten Meßprinzip, die von Schwankungen um den Nullpunkt, des Amplitudenverhältnisses und im gegenseitigen Winkelbezug herrühren, Fehler in der Meßsignalauswertung. Dies geht beispielsweise auf eine ungleichmäßige, d.h. mit Herstellungstoleranzen behaftete Verteilung der Segmente bzw. Perioden über die Länge bzw. Umfang des Teilungsmarken-Trägers, auf geringe Unterschiede in der Breite der Strichmarken auf der optischen (Teilungsträger-)Scheibe oder auf Zentrierungs- oder Führungsfehler des Markenträgers zurück. Wird z.B. eine mit einem gattungsgemäßen Positionsgeber ausgestattete Maschine warm, kann es zu exzentrischen Verlagerungen des Teilungsmarken-Trägers kommen, was die Signalauswertung bzw. Positionsermittlung verfälscht. Jedoch ist vor allem im Druckmaschinenbereich eine präzise Lageregelung mit hochauflösenden Positionsgebern unabdingbar.

Ein erster Versuch zur Abmilderung derartiger Fehler in der Meßsignalauswertung wurde im Rahmen der US-PS 5,202,842 unternommen. Dort ist ein Winkellagegeber offenbart mit einer Schaltung zur Kompensation der exzentrischen Anordnung eines Zahnrads auf der zu betrachtenden Welle, dessen Zähne magnetisch abgetastet werden mit zwei Magnetsensoren, welche, durch ein permanentmagnetisches Joch miteinander verbunden, dem Außenumfang des Zahnrads derart gegenübergestellt sind, daß ihr gegenseitiger Abstand einem Winkel von 90°, bezogen auf eine Zahnperiode des Zahnrads, entspricht. Die analogen Ausgangssignale dieser beiden Magnetsensoren werden einerseits je einem Komperator zugeführt, wo sie in zählbare Rechtecksignale umgewandelt werden. Durch Berücksichtigung der gegenseitigen Phasenlage kann die Drehrichtung ermittelt und sodann ein Winkellagewert mit grober Auflösung bestimmt werden. Zur Feinauflösung werden in einem parallelen Schaltungszweig die Ausgangssignale der beiden Magnetsensoren abgetastet und je einem Analog-Digital-Wandler zugeführt, damit die Amplitudenwerte einer digitalen Signalverarbeitung zugänglich sind. Im Rahmen dieser digitalen Signalverarbeitung wird zunächst auf herkömmlichem Weg der Quotient aus beiden Amplitudenwerten gebildet, aus welchem sodann anhand der Arkustangens-Funktion ein angenäherter Winkelwert mit feinerer Auflösung bestimmt wird. Um die durch Exzentrizitäten des Zahnrads hervorgerufenen Amplitudenschwankungen der beiden Meßsignale zu kompensieren, wird zusätzlich anhand des nach der Hypothenuse aufgelösten Satzes von Pythagoras der Betrag des den beiden, um 90° phasenverschobenen Signalen zuzuordnenden Vektors ermittelt, und der so gefundene, tatsächliche Betragswert wird von einem Referenzwert subtrahiert, der dem Mittelwert zwischen maximalem und minimalem Betragswert entspricht. Somit kann ein Fehlersignal errechnet werden, das zu dem genäherten Feinwinkelwert hinzuaddiert wird, um Einflüsse des exzentrisch angeordneten Zahnrads zu minimieren. Diese vorbekannte Schaltung ist allerdings auf die Kompensation von Exzentrizitäten beschränkt, da in dem betragsbildenden Block der tatsächliche Amplitudenwert errechnet wird, und somit ausschließlich dessen Schwankungen erfaßt werden; diese Schwankungen werden jedoch ausschließlich durch gleichsinnige Veränderungen der Ausgangsamplituden an beiden Sensoren hervorgerufen, während gegensinnige Amplitudenveränderungen bei der Errechnung des Vektorbetrags sich gegenseitig aufheben. Die somit ausschließlich registrierten, gleichsinnigen Amplitudenänderungen gehen jedoch ohnehin kaum in die Berechnung des Feinwinkelwerts ein, da sie sich bei der Quotientenbildung weitgehend wegkürzen. Die sodann noch verbleibenden, auf gegensinnige Amplitudenänderungen zurückzuführenden Abweichungen des Feinwinkelwerts kann auch die vorbekannte Anordnung nicht eliminieren, da sie im Rahmen der Betragsbildung nicht erfaßt werden.

Ein weiterer Ansatz zur Verbesserung der Meßsignalauswertung einer Längen- oder Winkelmeßeinrichtung nach dem vorerwähnten Prinzip findet sich in der DE-OS 41 00 666. Hierbei werden die analogen, periodischen Sinus- und Cosinus-Meßsignale in bestimmten Zeitabständen abgetastet und sodann festgehalten, so daß diese in einer zweiten Berechnungsphase einer sukzessiven Approximation zugänglich sind. Die hierbei verwendete Approximationsschaltung umfaßt einen sog. Vektor-Generator, der aus vorgebbaren Winkel- und Betragswerten eines Vektors die entsprechenden Sinus- und Cosinuscomponenten erzeugt. welche sodann in je einem Komparator mit den gespeicherten Abtastwerten der Meßsignale verglichen werden. Anhand der Meßergebnisse werden sodann der Betrags- und/oder Winkelwert des Referenzvektors sukzessive derart optimiert, daß die Abweichungen der Sinus- und Cosinuswerte gegenüber den tatsächlichen Meßsignalen schließlich vernachlässigbar klein werden. Sodann können die gefundenen Betrags- und Winkelwerte des Referenzvektors ausgelesen und zur weiteren Verarbeitung verwendet werden. Bei dieser Anordnung wird also nicht ausschließlich der reine Winkelwert berechnet, sondern zudem noch ein Betragswert, der einen zweiten Freiheitsgrad des Systems bildet, so daß gegenüber dem ebenfalls zweidimensionalen Meßsignalvektor keinerlei Information verlorengeht. Hier können demnach durch gleichsinnige Amplitudenänderungen der beiden Meßsignale hervorgerufene Streckungen oder Stauchungen des Eingangssignalvektors gegenüber einem Betragssollwert durch die ebenfalls variable Betragskomponente des approximativ ermittelten Vektors aufgefangen werden, während jedoch gegensinnige Änderungen der Amplitudenwerte der beiden Eingangssignale zu einer Verdrehung des betreffenden Eingangsvektors führen, welcher auch mit dem aus dieser Entgegenhaltung vorbekannten Verfahren nicht mehr eliminiert werden kann und somit den approximativ ermittelten Winkelwert nachhaltig verfälscht.

Schließlich wurde in dem 1992 erschienenen 59. Jahrgang der Fachzeitschrift „tm - Technisches Messen", Heft 12, Seiten 497 - 503, im Rahmen einer Fortsetzung ein Teil eines Aufsatzes von R. Best veröffentlicht, der sich der adaptiven Filterung widmet. Hierbei handelt es sich jedoch um allgemein gehaltene Ausführungen, die keinerlei Bezug zur Optimierung der Meßergebnisse bei Positionsgebern aufweist. Die prinzipielle Struktur eines Adaptivfilters besteht in einem in den zu filternden Signalzweig eingeschleiften, programmierbaren Filter, dessen Parameter durch eine Adaptierungsschaltung verändert werden können. Das Eingangssignal dieser Adaptierungsschaltung entspricht der arithmetischen Differenz aus dem gefilterten Signal und einem vorgegebenen Referenzsignal. Die Differenz entspricht hierbei einem Fehlersignal, das im Rahmen der adaptiven Filterung auf Null abgeglichen werden soll, so daß das gefilterte Ausgangssignal dem vorgegebenen Referenzsignal möglichst exakt nachgeführt wird. Eine derartige Filterung ist jedoch zur Kompensation von Meßfehlem im Rahmen der Messung der Absolutposition des beweglichen, zyklischen Teilungsmarken-Trägers eines inkrementalen Positionsgebers völlig ungeeignet, da hier das Ausgangssignal der Strecke nicht einem Referenzsignal nachgeführt werden soll, sondern aus dem durch verschiedene Einflüsse verfälschten Meßsignal soll der wahre, ursprüngliche Wert herausgefunden werden.

Das der Erfindung zugrundeliegende Problem besteht darin, bei dem eingangs genannten Meßsystem bei physikalisch bzw. konstruktiv gleichbleibender Teilungsverkörperung eine verfeinerte Auflösung vor allem der Absolutposition zwischen zwei Teilungsmarken bzw. innerhalb eines Teilungssegmentes zu erreichen, wobei die Nachteile des oben genannten Standes der Technik vermieden sind. Zur Lösung des Erfindungsproblems werden das im Patentanspruch 1 gekennzeichnete Meßverfahren und die im Patentanspruch 8 gekennzeichnete Meßvorrichtung vorgeschlagen. Weitere vorteilhafte Ausgestaltungen ergeben sich aus den abhängigen Ansprüchen.

Die Korrektur der eingangs genannten meßfehler wird erfindungsgemäß also dadurch erreicht, daß über ein Adaptionsgesetz ein Parameter- bzw. Adaptivmeßsignal-Vektor erzeugt wird, der im laufenden Meßbetrieb kontinuierlich abgeglichen wird. Dieser Vektor wird dann zur Korrektur der Auswertung der sinus- und cosinusartigen Meßsignale verwendet. Diese Korrektur wird teilungsbezogen (z.B. bezogen auf einen Zahn) und/oder bezogen auf die Teilungsverkörperung (z.B. Zahnrad) durchgeführt, um vor allem Teilungsfehler bei der Meßsignalauswertung zu korrigieren.

Nach der erfindungsgemäßen adaptiven Korrektur des Positionsgebers mit Sinus/Cosinus-Meßsignal umfassen die Optimierungskriterien eine Adaptionsregel, die insbesondere nach der Methode des kleinsten Fehlerquadrates und/oder einem Gradienten-Verfahren, gegebenenfalls mit Empfindlichkeitsanalyse strukturiert ist; damit läßt sich der Parametervektor on-line zum laufenden Meßbetrieb abgleichen bzw. an den aktuellen Meßprozeß, vor allem die einzelnen Teilungssegmente, anpassen. Optimierungsverfahren oder -algorithmen wie Gradienten-Methoden, systematische Suchmethoden oder zufällige Suchmethoden sowie die Beurteilung des dynamischen Verhaltens realer Systeme durch Parameterempfindlichkeits-Analyse sind an sich bekannt (vgl. "adaptive Regelsysteme", Heinz Unbehauen, Studie bzw. Vorlesung an der Universität Stuttgart, 1971/1975, insbesondere die Seiten 15 - 26).

Im Rahmen der Erfindung wird parallel zum laufenden Meßbetrieb ein parametrisiertes, algorithmisches Modell von dem Meßvorgang erstellt und anhand der korrigierten Positionswerte und/oder des Parameter-Adaptivmeßsignal-Vektors laufend aktualisiert. Dessen Ausgangswerte können dann zur Optimierung mit den Meßsignalen, die aus den Abtastelementen abgreifbar sind, verglichen werden. Identifizierungsmethoden mit adaptiven Modellen, insbesondere parallelen Vergleichsmodellen mit einer dem zu untersuchenden System möglichst ähnlichen Struktur sind an sich bekannt (vgl. Unbehauen a.a.O., insbesondere Seite 28ff.). Dies gilt auch für die Methode des kleinsten Fehlerquadrates (vgl. Unbehauen a.a.O.).

In spezieller Ausgestaltung des erfindungsgemäß verwendeten, parallelen und parametrisierten Vergleichsmodells wird die komplexe Funktion

$$z = f(\alpha) \tag{1}$$

einer reellen veränderlichen $\alpha$ verwendet mit

$$z = x + j \cdot y \tag{2}$$

als komplexe Zahl, wobei

$$j = \sqrt{-1}. \tag{3}$$

So läßt sich die Modellgleichung

$$Z_m = Z_0 + Z_c \cdot e^{j \cdot \alpha} + Z_d e^{-j \cdot \alpha} \tag{4}$$

ansetzen (vgl. Bronstein-Semendjajev "Taschenbuch der Mathematik", Verlag Harry Deutsch 1973, Seiten 431 - 433). In der Parameterform

$$x = x(\alpha) \tag{5}$$

$$y = y(\alpha) \tag{6}$$

mit

$$Z_m = x_m + jy_m \tag{7}$$

$$Z_o = x_o + jy_o \tag{8}$$

$$Z_c = x_c + jy_c \tag{9}$$

$$Z_d = x_d + jy_d \tag{10}$$

und

$$e^{j\alpha} = \cos \alpha + j \sin \alpha \tag{11}$$

$$e^{-j\alpha} = \cos \alpha - j \sin \alpha \tag{12}$$

(vgl. Bronstein a.a.O. Seite 425 und 429) wird über einige Umformungen

$$
\begin{aligned}
X_m + jy_m = & \\
= x_o + jy_o + (x_c + jy_c)(\cos\alpha + j\sin\alpha) + (x_d + jy_d)(\cos\alpha - j\sin\alpha) & \\
= x_o + jy_o + x_c\cos\alpha + jy_c\cos\alpha + x_c j\sin\alpha - y_c\sin\alpha + x_d\cos\alpha + jy_d\cos\alpha - x_d j\sin\alpha + y_d\sin\alpha &
\end{aligned} \tag{13}
$$

$$x_m = x_o + x_c\cos\alpha - y_c\sin\alpha + x_d\cos\alpha + y_d\sin\alpha \tag{14}$$

$$jy_m = j(y_o + y_c\cos\alpha + x_c\sin\alpha + y_d\cos\alpha - x_d\sin\alpha) \tag{15}$$

$$x_m = x_o + (x_c + x_d)\cos\alpha - (y_c - y_d)\sin\alpha \tag{16}$$

$$y_m = y_o + (x_c - x_d)\sin\alpha + (y_c + y_d)\cos\alpha. \tag{17}$$

Mit dieser Methode läßt sich der Meßvorgang bzw. die realen Meßsignale oder wenigstens deren Grundwellen über die mathematische Definition einer Ellipse oder im Spezialfall eines Kreises, identifizieren und gegebenenfalls modellieren bzw. der entsprechend optimierte Parameter-Vektor aufstellen.

Das Vergleichsmodell basiert also nach einer besonders vorteilhaften Ausbildung der Erfindung auf einer allgemeinen Ellipse, die bezüglich des Koordinatenkreuzes im kartesischen Koordinatensystem beliebig liegt und durch Modellgleichungen bzw. den entsprechenden Parametersatz beschrieben ist. Die Adaption des Parametersatzes entsprechend jeder Teilungsmarke bzw. jedes Teilungssegmentes kann bei der erfindungsgemäßen Meßvorrichtung im Rechensystem zweckmäßig als Hintergrundprozeß mit langsamerer Geschwindigkeit betrieben werden. Zu dessen Aufsetzen bzw. Initialisieren sind dem Rechensystem die Anzahl der Teilungsmarken bzw. die Teilungen pro Längen- oder Winkeleinheit einzugeben.

Die Erfindung ist nicht auf die Anwendung mit inkrementalen Positionsgebern beschränkt. An deren Stelle können auch an sich bekannte Drehmelder/Resolver wirkungsgleich eingesetzt werden: Denn der Resolver besitzt im Stator und Rotor je zwei um 90° versetzte Wicklungen als Abtastelemente, so daß sich ebenfalls zwei sinus- und cosinusartige Ausgangssignale ergeben, die von der Winkelstellung des Rotors als Teilungsmarken-Träger abhängen. Im praktischen Einsatz mit der eingangs genannten Meßsignal-Auswertung (vgl. R.D. Klug a.a.O.) ist noch die Trägerfrequenz des Resolvers zu eliminieren.

Weitere Einzelheiten, Merkmale und Vorteile der Erfindung ergeben sich aus den Unteransprüchen, der nachfolgenden Beschreibung eines bevorzugten Ausführungsbeispiels der Erfindung sowie anhand der Zeichnungen. Diese zeigen in:

Fig. 1 ein Blockschaltbild für eine Anordnung zur Winkelberechnung mit einer erfindungsgemäßen Vorrichtung

Fig. 2 ein mathematisches Strukturschaltbild für das erfindungsgemäße Verfahren und die erfindungsgemäße Vorrichtung,

Fig. 3 und 4 gekrümmte und teilweise erfindungsgemäß modellierte Kurven im kartesischen Koordinatensystem,

Fig. 5 einen Ausschnitt aus Fig. 4 in vergrößerter Darstellung,

Fig. 6 die Absolutposition in einem Teilungssegment.

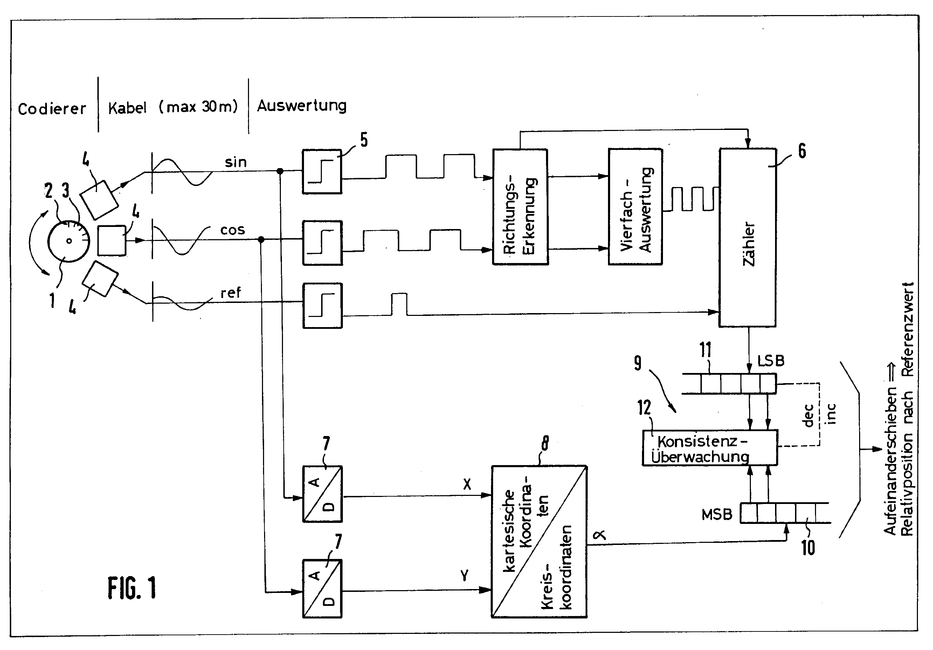

Gemäß Fig. 1 ist eine Scheibe 1, die an einer (nicht gezeichneten) Welle drehstarr befestigt ist in Rotation versetzt. Sie weist an ihrem Umfang gleichmäßig verteilte Striche auf, die Teilungsmarken 2 bilden und je ein Teilungssegment 3 begrenzen. Diese bewegen sich aufgrund der Rotation der Scheibe 1 an beispielsweise optisch funktionierenden Abtastköpfen 4 vorbei. Indem bei zwei von diesen der Abstand etwa ein Viertel des Abstandes zweier Teilungsmarken auf der Scheibe bzw. Teilungsmarken-Träger 1 beträgt, ergeben sich an deren Ausgängen Meßsignale sin, cos, die zueinander je nach Genauigkeit der Teilung auf dem Teilungsmarken-Träger 1 und/oder des Abstandes der Abtastköpfe 4 voneinander in sinus/cosinusartiger Phasenbeziehung stehen. Eine Impulsformerstufe 5 wandelt diese Signale in entsprechende Rechteck-Pulse um, so daß sie digital weiterverarbeitet, insbesondere in einem Zählerbaustein 6 gezählt werden können.

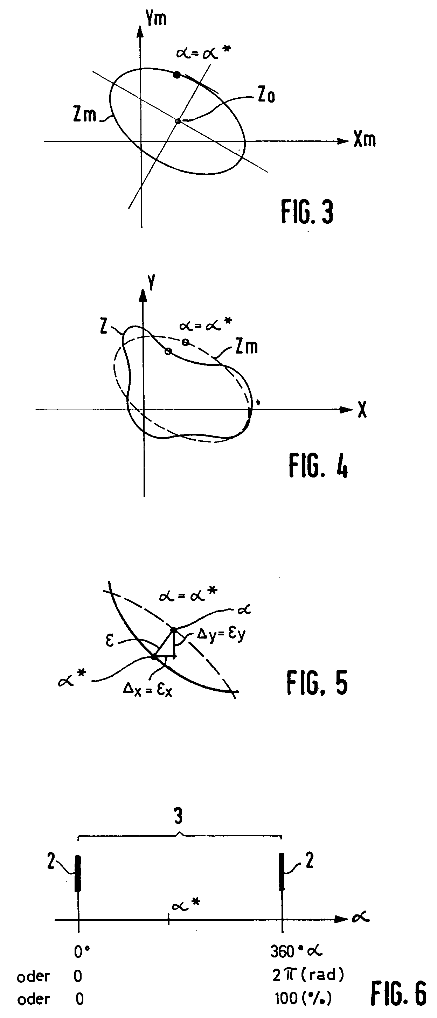

Eine Analog-/Digitalwandlerstufe 7 wandelt die beiden sinus- und cosinusartigen Meßsignale in jeweils einen Binärwert x, y um, die gemäß obiger Gleichung (2) als komplexe Zahl und/oder als Ellipsen-Koordinaten bezüglich eines kartesischen Koordinatensystems verarbeitet werden können. Diese (digitalisierten) Meßsignale x, y werden einer nach der Erfindung ausgeführten Meß- und Auswertevorrichtung 8 zugeführt, die einen realen Absolutpositionswert $\alpha^*$ bezüglich den beiden Teilungsmarken 2 eines Teilungssegments 3 (vgl. Fig. 6) in einen von Störungen und Ungenauigkeiten adaptiv bereinigten Absolutpositionswert $\alpha$ korrigiert. Dieser wird dann mit dem Ergebnis des Teilungsmarkenzählers 6, der entsprechend der bei der Umdrehung aufgetretenen Teilungsmarken seinen Zählerstand inkrementiert hat, zum Gesamt-Absolutpositionswert kombiniert. Hierzu ist eine Recheneinheit 9 vorgesehen, die zwei Register 10, 11 und einen Baustein 12 zur Konsistenzüberwachung aufweist. Dieser steuert das konsistente bzw. stellengerechte Ineinanderschieben des den Absolutwert $\alpha$ darstellenden Binärwerts im ersten Register 10 mit dem die aufgezählten Teilungssegmente bzw. Teilungsmarken darstellenden Binärwert im zweiten Register 11.

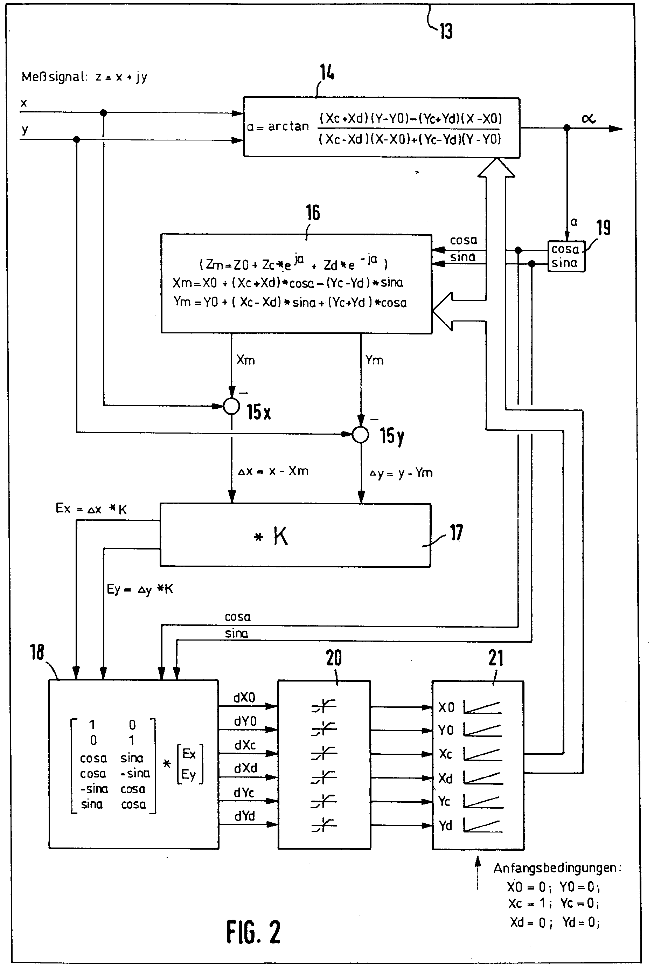

Die Meß- und Auswertevorrichtung 8 ist gemäß Fig. 2 mit einem Rechensystem 13 versehen, das eine auf der Basis des Arkus-Tangens arbeitende Auswerteeinheit 14 für die Meßsignale x, y aufweist. Am Ausgang generiert die Auswerteeinheit 14 das korrigierte Absolut-Positionssignal (bzw. einen entsprechenden Binärwert) $\alpha$. Die Meßsignale werden im Rechensystem 13 ferner in zwei Summier- bzw. Vergleichsstellen 15x, 15y mit je einem Ausgangswert Xm, Ym eines Vergleichsmodells 16 verglichen bzw. die Modellwerte davon subtrahiert. Die daraus resultierenden Abweichungen x, y werden in einer Verstärkerstufe 17 durch Multiplikation mit der Konstanten K in Fehlerwerte Ex, Ey weiterverarbeitet.

Ferner weist das Rechensystem 13 ein Optimierungs-Rechenmodul 18 auf, dem die Fehlersignale Ex, Ey zugeführt werden. Ferner werden diesem Modul 18 die Ausgänge eines Sinus- und Cosinusfunktionsgebers 19 zugeführt, der aus dem korrigierten Absolut-Positionssignal $\alpha$ dessen Sinus und Cosinus errechnet. In dem Optimierungs-Rechenmodul 18 sind in Form einer Matrizenmultiplikation mit dem Fehlervektor Ex, Ey Empfindlichkeitsfunktionen implementiert, die ein Adaptionsgesetz nach dem Gradienten-Verfahren und der Methode des kleinsten Fehlerquadrats (vgl. Unbehauen a.a.O.) in Verbindung mit der Differenzbildung 15x, 15y realisieren. Am Ausgang des Optimierungs-Rechenmoduls 18 entsteht zunächst ein differentieller Parametervektor dX0, dY0, dXc, dXd, dYc, dYd. Dieser wird einer Begrenzerstufe 20 zugeführt, welche eine Begrenzung der differentiellen Eingangssignale durchführt. Nach Begrenzung erfolgt eine Aufintegration der differentiellen Parametersignale dXo - dYd in der Integrierstufe 21. Wird anstelle eines Analogrechners ein Digitalrechner mit numerischen Berechnungsmethoden eingesetzt, dann stellen die Ausgangssignale dX0...dYd des Optimierungs-Rechenmoduls 18 Differenzensignale dar, die in einer etwa wirkungsgleichen Summierstufe 21 aufsummiert werden. Am Ausgang dieser Integrier- bzw. Summierstufe 21 steht dann der adaptierte Parametervektor bzw. -satz X0, Y0, Xc, Xd, Yc, Yd an, der sowohl der Auswerteeinheit 14 als auch dem Vergleichsmodell 16 jeweils als Eingangsparameter zugeführt wird. Dem Vergleichsmodell 16 werden ferner noch die Ausgänge des Sinus- und Cosinusfunktionsgebers 19 mit den entsprechenden Funktionswerten des Sinus und Cosinus der korrigierten Absolut-Position $\alpha$ direkt zugeführt. Das Vergleichsmodell 16 verarbeitet den Parametervektor bzw. -satz X0...Yd sowie den Sinus und den Cosinus der korrigierten Absolut-Position $\alpha$ entsprechend der obigen Gleichung (16) (Realteil) und (17) (Imaginärteil). Real- und Imaginärteil $X_m$, $Y_m$ werden dann den jeweiligen Vergleichsstellen 15X, 15Y mit negativem Vorzeichen zugeführt. Der Rechenprozeß für das Vergleichsmodell 16 kann im Rechensystem im Rahmen eines langsameren Hintergrundprozesses ablaufen. Zur schnellen "on-line"-Berechnung des korrigierten Absolut-Positionswertes $\alpha$ wird gesetzt:

$$x = x_o + (x_c + x_d) \cos\alpha - (y_c - y_d) \sin\alpha \qquad (18)$$

$$y = y_o + (x_c - x_d) \sin\alpha + (y_c + y_d) \cos\alpha \qquad (19)$$

woraus nach Umformung

$$(x_c + x_d) \cos\alpha - (y_c - y_d) \sin\alpha = x - x_o \qquad (20)$$

$$(y_c + {}_y d) \cos\alpha + (x_c - x_d) \sin\alpha = y - y_o \qquad (21)$$

entsteht.

Dieses lineare Gleichungssystem für die beiden unbekannten Cosinus $\alpha$ und Sinus $\alpha$ ergibt nach bekannter Auflösungsmethode (vgl. Bronstein a.a.O. Seite 127)

$$(22) \quad \cos \alpha = \frac{D_1}{D}$$

$$(23) \quad \sin \alpha = \frac{D_2}{D}$$

oder sofort

$$(24) \quad \tan \alpha = \frac{\sin \alpha}{\cos \alpha} = \frac{D_2}{D_1}$$

Dabei sind die Determinanten

$$D_2 = (x_c + x_d)(y - y_o) - (y_c + y_d)(x - x_o) \tag{25}$$

$$D_1 = (x_c - x_d)(x - x_o) + (y_c - y_d)(y - y_o). \tag{26}$$

Damit ergibt sich die Absolut-Position als gesuchte Veränderliche in wie folgt korrigierter Fassung:

$$(27) \quad \alpha = \arctan \frac{(x_c + x_d)(y - y_o) - (y_c + y_d)(x - x_o)}{(x_c - x_d)(x - x_o) + (y_c - y_d)(y - y_o)}$$

Zur Wirkungsweise des erfindungsgemäßen Meß- und Auswertesystems sei noch folgendes ausgeführt:

Das (gegebenenfalls bei Einsatz eines Digitalrechners statt eines Analogrechners digitalisierte) Meßsignal-Wertepaar X,Y bestimmt die Absolut-Position innerhalb eines Teilungssegmentes 3 zwischen zwei Teilungsmarken 2, die als ungenaues bzw. gestörtes Absolut-Positionssignal $\alpha^*$ vorliegt. Das Teilungssegment 3 bildet dabei eine Periode bzw. einen Zyklus. Ziel ist es nun, eine feine Unterteilung zwischen den beiden Teilungsmarken 2 zwecks höherer Auflösung zu erzeugen, ohne daß konstruktiv eine Feineinteilung zwischen den Teilungsmarken 2 angebracht werden muß.

Mit dem von den beiden Abtastköpfen 4 gelieferten Meßsignal-Paar X,Y lassen sich insbesondere geschlossene Kurven in mathematisch komplexer Form darstellen (vgl. Bronstein a.a.O. Seiten 432 und 433). In der Realität könnte man sich den mit Störungen und Ungenauigkeiten behafteten Absolutwert $\alpha^*$, verteilt zwischen den beiden Teilungsmarken 2, entsprechend der unregelmäßig gekrümmten Kurve Z (durchgezogene Linie) in Fig. 4 darstellen. In dieser unregelmäßig gekrümmten Kurve Z sind insbesondere folgende Störungen bzw. Ungenauigkeiten enthalten: Verschiebung aus dem Koordinatenursprung bzw. Nullpunkt des kartesischen Koordinatenkreuzes, was beispielsweise auf einen elektrischen Offset beruhen kann; Verzerrung des an sich im Idealfall vorliegenden Kreises aufgrund schwankenden Amplitudenverhältnisses der Meßsignale aus den beiden Ab4; Schwankungen und Störungen im gegenseitigen Winkel- bzw. Phasenbezug der beiden Meßsignale X,Y aus den Abtastköpfen, was zur Verdrehung der Ellipse bzw. deren Achsen gegenüber dem Koordinatenkreuz führt. Diese Meßwert-Verfälschungen treten meist kombiniert auf.

Die Strategie besteht nun darin, das Meßsignal Z im Vergleichsmodell 16 so zu interpretieren, daß sich die genannten Verzerrungen aufgrund der obigen Störeinflüsse und Ungenauigkeiten auf eine im kartesischen Koordinatenkreuz beliebige, gegebenenfalls gedrehte und versetzte Ellipse reduzieren. Dies ist in Fig. 3 veranschaulicht, wonach der Vergleichsmodellausgang $Z_m$ eine solche Ellipse beschreibt. Wäre die Messung ideal, würde diese Ellipse sich auf einen Kreis mit dem Radius = 1 reduzieren, dessen Mittelpunkt im Koordinatenursprung liegt (Einheitskreis). Erfindungsgemäß wird nun die allgemein liegende, in komplexer Form $Z_m$ beschreibbare Ellipse gesucht, die dem Meßsignal Z gemäß obiger Gleichung (2) am besten entspricht. Dies ist in Fig. 4 durch Überlagerung der Modellkurve $Z_m$ der real gemessenen Kurve Z veranschaulicht. Gemäß Fig. 5 wird als Kriterium für die der Realmessung Z am besten entsprechende Modellkurve $Z_m$ die Methode des kleinsten Fehlerquadrats (Gütefunktional - vgl. Unbehauen a.a.O.) verwendet. Danach soll das Gütefunktional

$$\epsilon^2 = \epsilon^2 x + \epsilon^2 y = \text{Min} \tag{28}$$

(vgl. Fig. 5) möglichst klein sein, was der der unregelmäßig gekrümmten Kurve Z am nächsten liegenden Modell-Ellipse $Z_m$ entspricht. Hierzu ist eine optimale Anpassung bzw. ein ständiger Abgleich des Vergleichsmodells 16 (vgl. Fig. 2) notwendig. Dies wird mittels des Optimierungs-Rechenmoduls 18 erreicht, der mittels Empfindlichkeitsfunktionen partielle Ableitungen bezüglich der Änderungen der Meßvorgangsparameter bildet. Der nach Integration 21 entstandene Parametersatz $x_o...y_d$ dient dann einerseits zur Aktualisierung des Vergleichsmodells 16. Andererseits wird die allgemein liegende Ellipse $Z_m$ gemäß Fig. 3 durch die im Rahmen des Arkus-Tangens erfolgende Korrektur-Rechenregel der Auswerteeinheit 14 in einen Ursprungskreis transformiert. Ellipsen-Transformationsgleichungen sind grundsätzlich bekannt (vgl. Bronstein, a.a.O., Seiten 182, 183). Die Parameter $x_o$ und $y_o$ repräsentieren im Ausführungsbeispiel die Parallel- bzw. Nullpunktverschiebung. Die sonstigen Parameter $X_c...Y_d$ dienen der Ellipsendarstellung und sind im Idealfall bzw. ganz am Anfang außer $X_c$ gleich Null zu setzen (vgl. in Fig. 2 Anfangsbedingungen, wobei $X_c = 1$ den Radius des idealen Ursprungskreises symbolisiert).

Das so korrigierte Absolutpositionssignal $\alpha$ bildet dann ein hochgenaues, hochaktuelles Meßsignal, welches beispielsweise als Lageregelsignal in Druckmaschinen-Direktantriebeu verwendet werden kann. Dabei ist gleichsam eine Teilungsvervielfachung entstanden, ohne daß die Anzahl der Teilungsmarken 2 erhöht wurde. Als reelle Veränderliche einer komplexen Funktion Z($\alpha$) unterteilt nämlich das Absolutpositionssignal $\alpha$ die Ellipsenkurve bzw. das Teilungssegment 3 zwischen den beiden Teilungsmarken 2.

**Patentansprüche**

1. Verfahren zur Messung der Absolutposition ($\alpha$) des beweglichen, zyklischen Teilungsmarken-Trägers (1) eines inkrementalen Positionsgebers oder Drehmelders innerhalb und/oder bezüglich eines seiner Teilungssegmente (3), die periodisch von den Teilungsmarken (2) auf dem Träger (1) gebildet und/oder begrenzt sind, mit zwei gegenüber dem Träger (1) ortsfest angeordneten und auf die Teilungsmarken ansprechenden Abtastelementen (4), die in einem derartigen, auf die Länge beziehungsweise den Umfang des Segments (3) bezogenen Abstand voneinander angeordnet sind, daß sie zwei sinus- und cosinusartige Meßsignale (x,y) ausgeben, die zur Ermittlung der Absolutposition ($\alpha$) auf der Basis der Arkustangens-Funktion ausgewertet werden, wobei zur Korrektur der Auswertung gegenüber Störungen und Ungenauigkeiten im Positionsgeber die Werte beziehungsweise Komponenten eines den Meßvorgang identifizierenden Vektors (X0, Y0, Xc, Yc, Xd, Yd) von Parametern eines mathematischen Modells (16) des Meßvorgangs verwendet werden, welcher Parametervektor während des laufenden Meßbetriebs ständig nach vorbestimmten Optimierungskriterien neu bestimmt wird, **dadurch gekennzeichnet, daß** parallel zum laufenden Meßbetrieb das mathematische Modell (16) in Form einer komplexen Funktion (Zm) der Absolutposition ($\alpha$) von dem Meßvorgang berechnet und anhand der korrigierten Positionswerte und/oder des Parametervektors (X0, Y0, Xc, Yc, Xd, Yd) laufend aktualisiert wird, und zur Optimierung Ausgangswerte (Xm, Ym, Zm) des mathematischen Modells (16) mit den Meßsignalen (x,y) aus den Abtastelementen verglichen werden, wobei die Optimierungskriterien eine Adaptionsrechenregel umfassen, mittels deren der Parametervektor (X0, Y0, Xc, Yc, Xd, Yd) ständig abgeglichen beziehungsweise an den aktuellen Meßprozeß angepaßt wird.

2. Verfahren nach Anspruch 1, dadurch gekennzeichnet, daß die vorbestimmten Optimierungskriterien eine nach der Methode des kleinsten Fehlerquadrats ($\varepsilon^2$) und/oder einem Gradientenverfahren, gegebenenfalls mit Empfndlichkeitsanalyse (18), arbeitende Adaptionsrechenregel umfaßt, mittels der der Parametervektor (X0, Y0, Xc, Yc, Xd, Yd) ständig abgeglichen und an den aktuellen Meßprozeß angepaßt wird.

3. Verfahren nach Anspruch 1 oder 2, dadurch gekennzeichnet, daß das Vergleichsergebnis ($\Delta x, \Delta y$), gegebenenfalls zusammen mit dem korrigierten Absolutpositionswert ($\alpha$), als Eingangswert für die Adaptionsrechenregel verwendet wird.

4. Verfahren nach einem der vorangehenden Ansprüche, dadurch gekennzeichnet, daß zur Identifikation und Modellierung des Meßvorganges, der Meßsignale (x,y) oder wenigstens von deren Grundwellen der optimierte Parametervektor (X0, Y0, Xc, Yc, Xd, Yd) und mathematische Gleichungen verwendet werden, die zur mathematischen Definition ($z = x + jy$) einer Ellipse (Zm) oder eines Kreises strukturiert sind.

5. Verfahren nach Anspruch 4, dadurch gekennzeichnet, daß bei der Positionsermittlung die Meßsignale (x,y) zur Korrektur ihrer Auswertung mit dem Parametervektor (X0, Y0, Xc, Yc, Xd, Yd) und/oder den Gleichungen mathematisch verknüpft werden.

6. Verfahren nach Anspruch 5, dadurch gekennzeichnet, daß aus den Komponenten des Parametervektors (X0, Y0, Xc, Yc, Xd, Yd) und aus den Meßsignalen (x,y) entsprechenden Werten ein Gleichungssystem zur Bestimmung des Sinus und des Cosinus der Absolutposition gebildet wird, und aus diesen über die Arkustangensfunktion der Wert für die Absolutposition ($\alpha$) errechnet wird.

7. Verfahren nach einem der Ansprüche 4 bis 6, dadurch gekennzeichnet, daß zur Korrektur der Meßsignal-Auswertung eine Verschiebung des kartesischen Koordinatenursprungs in den Kurvenmittelpunkt der Ellipse (Zm), und/oder eine Drehung des kartesischen Koordinatenkreuzes entsprechend den sich kreuzenden Achsen der Ellipse (Zm), und/oder eine Angleichung der Ellipsenachsen aneinander zur Bildung eines Kreises jeweils über mathematische Transformationen und/oder Verknüpfung der Ellipsenparameter (Zm,Z0) mit den Meßsignalen (x,y) durchgeführt werden.

8. Vorrichtung zur Messung der Absolutposition des beweglichen, zyklischen Teilungsmarken-Trägers (1) eines inkrementalen Positionsgebers oder Drehmelders innerhalb und/oder bezüglich eines seiner Teilungssegmente (3), die von den Teilungsmarken (2) periodisch auf dem Träger (1) gebildet und/oder begrenzt sind, mit zwei gegenüber dem Träger (1) ortsfest angeordneten und auf die Teilungsmarken (2) ansprechenden Abtastelementen (4), die in einem derartigen, auf die Länge beziehungsweise den Umfang des Segments (3) bezogenen Abstand voneinander angeordnet sind, daß sich an den Ausgängen der Abtastelemente (4) zwei sinus- und cosinusartige Meßsignale (x,y) ergeben, mit einem Rechensystem (13), das eine die Meßsignale (x,y) aufnehmende Auswerteeinheit (14) aufweist, in der diese zur Ermittlung der Absolutposition ($\alpha$) auf der Basis der Arkustangens-Funktion verrechenbar sind **dadurch gekennzeichnet, daß** das Rechensystem eine Adaptionseinheit (15x,15y,16,17,18,19,20,21) aufweist, die eingangsseitig parallel zur Auswerteeinheit (14) mit den Meßsignalen (x,y) und ausgangsseitig mit der Auswerteeinheit (14) zur Übertragung eines Parametervektors (X0, Y0, Xc, Yc, Xd, Yd) verbunden ist, der nach einer in der Adaptionseinheit implementierten Adaptionsrechenregel abhängig von den Meßsignalen (x,y) und dem von der Auswerteeinheit ermittelten Absolutpositionssignal ($\alpha$) generierbar ist, und daß in der Auswerteeinheit (14) der Parametervektor (X0, Y0, Xc, Yc, Xd, Yd) nach einer Korrekturrechenregel mit den Meßsignalen (x,y) verknüpfbar sind.

9. Vorrichtung nach Anspruch 8, dadurch gekennzeichnet, daß in der Adaptionseinheit (15x,15y,16,17,18,19,20,21) ein parametrisiertes Rechenmodell (16) implementiert ist, das eingangsseitig mit dem Ausgang der Auswerteeinheit (14) und dem Parametervektor (X0, Y0, Xc, Yc, Xd, Yd) zur Nachstellung seiner Parameter gekoppelt und dazu ausgebildet ist, abhängig vom korrigierten Absolutpositionssignal ($\alpha$) den Positionsmeßvorgang rechnerisch nachzumodellieren.

10. Vorrichtung nach Anspruch 9, gekennzeichnet durch eine Vergleicherstufe (15x,15y), die mit dem Ausgang des Rechenmodells (16) und dem Ausgang (x,y) des Positionsgebers zur Bildung von Differenz- und/oder Fehlersignalen ($\Delta x, \Delta y; Ex, Ey$) verbunden ist.

11. Vorrichtung nach Anspruch 10, dadurch gekennzeichnet, daß der Vergleicherstufe (15x,15y) eine Multiplikations- oder Verstärkerstufe (17) nachgeschaltet ist.

12. Vorrichtung nach einem der Ansprüche 8 bis 11, dadurch gekennzeichnet, daß die Adaptionseinheit (15x,15y,16,17,18,19,20,21) ein Optimierungs-Rechenmodul (18) aufweist, das, gegebenenfalls indirekt, eingangsseitig mit den Meßsignalen (x,y) und/oder dem korrigierten Absolutpositionssignal ($\alpha$) und ausgangsseitig mit der Auswerteeinheit (14) gekoppelt ist, und in dem eine Optimierungsrechenregel implementiert ist.

13. Vorrichtung nach Anspruch 12 und einem der Ansprüche 10 oder 11, dadurch gekennzeichnet, daß das Optimierungs-Rechenmodul (18) eingangsseitig mit dem Ausgang der Vergleicher- oder Multiplikations- oder Verstärkerstufe (17) verbunden ist.

14. Vorrichtung nach Anspruch 13, dadurch gekennzeichnet, daß im Optimierungs-Rechenmodul (18) ein Gradientenverfahren oder eine oder mehrere Empfindlichkeitsfunktionen als Optimierungsrechenregel implementiert sind, so daß am Ausgang des Optimierungs-Rechenmoduls (18) eine oder mehrere Differenzen- oder differentielle Signale (dX0, dY0, dXc, dYc, dXd, dYd) anstehen, und daß diese in einer nachgeschalteten und mit der Auswerteeinheit (14) verbundenen Integrier- oder Summierstufe (21) zu dem Parametervektor (X0, Y0, Xc, Yc, Xd, Yd) für die Auswerteeinheit (14) und/oder das Vergleichsmodell (16) aufintegriert und/oder aufsummiert werden.

15. Vorrichtung nach Anspruch 14, gekennzeichnet durch eine Tiefpaß- oder Begrenzerstufe (20), die dem Optimierungsrechenmodul (18) und der Integrier- oder Summierstufe (21) zwischen- oder nachgeschaltet ist.

16. Vorrichtung nach einem der Ansprüche 8 bis 15, gekennzeichnet durch einen Teilungsmarkenzähler (6), dessen Ausgang mit dem Ausgang der Auswerteeinheit (8;14) über eine Recheneinheit (9) zur Bildung der Gesamt-Absolutposition gekoppelt ist.

17. Vorrichtung nach Anspruch 16, dadurch gekennzeichnet, daß die Recheneinheit (9) ein Summierglied für die korrigierte Absolutposition ($\alpha$) aus der Auswerteeinheit (14) und das Zählergebnis aus dem Teilungsmarkenzähler (6) und ein nachgeschaltetes, auf die Teilungsmarken-Gesamtzahl eingestelltes Dividierglied oder wenigstens zwei Werte-Register (10,11) aufweist, die mit je einem Ausgang der Auswerteeinheit (14) und des Teilungsmarkenzählers (6) verbunden und zum konsistenten Ineinanderschieben von Binärwerten, ausgebildet und/oder mit einer Konsistenzsteuerung (12) versehen sind.

**Claims**

1. Method of measuring the absolute position ($\alpha$) of the movable, cyclical graduation marks carrier (1) of an incremental position transmitter or synchro within and/or with respect to one of its graduation segments (3), which are formed and/or limited periodically by the graduation marks (2) on the carrier (1), with two scanning elements (4) which are disposed in a stationary manner in relation to the carrier (1) and respond to the graduation marks and which are disposed at an interval from one another, referred to the length or periphery of the segment (3), such that they emit two sine-like and cosine-like measurement signals (x, y) which are evaluated for the purpose of ascertaining the absolute position ($\alpha$) on the basis of the arc tangent function, use being made, for the purpose of correcting the evaluation in relation to malfunctions and inaccuracies in the position transmitter, of the values or components of a vector (X0, Y0, Xc, Yc, Xd, Aid), which identifies the measuring process, of parameters of a mathematical model (16) of the measuring process, which parameter vector is constantly re-determined according to predetermined optimisation criteria during the current measuring operation, **characterised in that,** in parallel with the current measuring operation, the mathematical model (16) is computed in the form of a complex function (Zm) of the absolute position ($\alpha$) by the measuring process and is continuously updated with the aid of the correction position values and/or of the parameter vector (X0, Y0, Xc, Yc, Xd, Yd), and for optimisation purposes, output values (Xm, Ym, Zm) of the mathematical model (16) are compared with the measurement signals (x, y) from the scanning elements, the optimisation criteria comprising an adaptation computing rule, by means of which the parameter vector (X0, Y0, Xc, Yc, Xd, Yd) is constantly adjusted or is constantly adapted to the actual measuring process.

2. Method according to claim 1, characterised in that the predetermined optimisation criteria comprise an adaptation computing rule which operates according to the method of the least error square ($\varepsilon^2$) and/or a gradients method, optionally with sensitivity analysis (18), and by means of which the parameter vector (X0, Y0, Xc, Yc, Xd, Yd) is constantly adjusted and is constantly adapted to the current measuring process.

3. Method according to claim 1 or 2, characterised in that the comparison result ($\Delta x$, $\Delta y$) is used, optionally together with the corrected absolute position value ($\alpha$), as the input value for the adaptation computing rule.

4. Method according to one of the preceding claims, characterised in that, for the purpose of identifying and modelling the measuring process, the measurement signals (x, y) or at least their fundamental waves, use is made of the optimised parameter vector (X0, Y0, Xc, Yc, Xd, Yd) and of mathematical equations which are structured for the mathematical definition ($z = x + jy$) of an ellipse (Zm) or of a circle.

5. Method according to claim 4, characterised in that, when ascertaining the position, the measurement signals (x, y) are mathematically linked, for the purpose of correcting their evaluation, with the parameter vector (X0, Y0, Xc, Yc, Xd, Yd) and/or the equations.

6. Method according to claim 5, characterised in that there is formed, from the components of the parameter vector (X0, Y0, Xc, Yc, Xd, Yd) and from values corresponding to the measurement signals (x, y), a system of equations for determining the sine and cosine of the absolute position, and the value for the absolute position ($\alpha$) is calculated from these via the arc tangent function.

7. Method according to one of claims 4 to 6, characterised in that there are performed, for the purpose of correcting the measurement signal evaluation, a displacement of the cartesian origin of coordinates into the central point of the curve of the ellipse (Zm), and/or a rotation of the cartesian system of coordinates in a manner corresponding to the intersecting axes of the ellipse (Zm), and/or an assimilation of the axes of the ellipse to one another for the purpose of forming a circle, in each case, via mathematical transformations and/or linking of the parameters (Zm, Z0) of the ellipse with the measurement signals (x, y).

8. Device for measuring the absolute position of the movable, cyclical graduation marks carrier (1) of an incremental position transmitter or synchro within and/or with respect to one of its graduation segments (3), which are formed and/or limited periodically on the carrier (1) by the graduation marks (2), with two scanning elements (4) which are disposed in a stationary manner in relation to the carrier (1) and respond to the graduation marks (2) and which are disposed at an interval from one another, referred to the length or periphery of the segment (3), such that two sine-like and cosine-like measurement signals (x, y) are produced at the outputs of the scanning elements (4), with a computing system (13) which has an evaluating unit (14) which receives the measurement signals (x, y) and in which the latter can be computed for the purpose of ascertaining the absolute position ($\alpha$) on the basis of the arc tangent function, **characterised in that** the computing system has an adaptation unit (15x, 15y, 16, 17, 18, 19, 20, 21) which, on the input side, is connected in parallel with the evaluating unit (14) to the measurement signals (x, y) and, on the output side, to the evaluating unit (14) for the purpose of transmitting a parameter vector (X0, Y0, Xc, Yc, Xd, Yd) which can be generated, according to an adaptation computing rule implemented in the adaptation unit, in dependence upon the measurement signals (x, y) and upon the absolute position signal ($\alpha$) ascertained by the

evaluating unit, and that, in the evaluating unit (14), the parameter vector (X0, Y0, Xc, Yc, Xd, Yd) can be linked to the measurement signals (x, y) in accordance with a correction computing rule.

9. Device according to claim 8, characterised in that there is implemented, in the adaptation unit (15x, 15y, 16, 17, 18, 19, 20, 21), a parametric computing model (16) which is coupled, on the input side, to the output of the evaluating unit (14) and to the parameter vector (X0, Y0, Xc, Yc, Xd, Yd) for the purpose of setting its parameters, and is constructed for the purpose of modelling the position-measuring process by computation, in dependence upon the corrected absolute position signal ($\alpha$).

10. Device according to claim 9, characterised by a comparator stage (15x, 15y) which is connected to the output of the computing model (16) and to the output (x, y) of the position transmitter for the purpose of forming difference and/or error signals ($\Delta$x, $\Delta$y; Ex, Ey).

11. Device according to claim 10, characterised in that a multiplication or amplifier stage (17) is connected downstream of the comparator stage (15x, 15y).

12. Device according to one of claims 8 to 11, characterised in that the adaptation unit (15x, 15y, 16, 17, 18, 19, 20, 21) has an optimisation computing module (18) which is coupled, optionally indirectly, on the input side to the measurement signals (x, y) and/or to the corrected absolute position signal ($\alpha$) and, on the output side, to the evaluating unit (14), and in which an optimisation computing rule is implemented.

13. Device according to claim 12 and one of claims 10 or 11, characterised in that the optimisation computing module (18) is connected, on the input side, to the output of the comparator or multiplication or amplifier stage (17).

14. Device according to claim 13, characterised in that a gradients method or one or more sensitivity functions are implemented in the optimisation computing module (18) as the optimisation computing rule, so that one or more difference or differential signals (dX0, dY0, dXc, dYc, dXd, dYd) occur at the output of the optimisation computing module, and that the said signals are integrated up and/or added up, in an integrating or adding stage (21) which is connected downstream and is connected to the evaluating unit (14), to form the parameter vector (X0, Y0, Xc, Yc, Xd, Yd) for the said evaluating unit (14) and/or the comparison model (16).

15. Device according to claim 14, characterised by a low-pass or limiter stage (20) which is connected between, or downstream of, the optimisation computing module (18) and the integrating or adding stage (21).

16. Device according to one of claims 8 to 15, characterised by a graduation marks counter (6), the output of which is coupled to the output of the evaluating unit (8; 14) via a computing unit (9) for forming the overall absolute position.

17. Device according to claim 16, characterised in that the computing unit (9) has an adding member for the corrected absolute position ($\alpha$) from the evaluating unit (14) and the counting result from the graduation marks counter (6), and a dividing member, which is connected downstream and is set to the overall number of graduation marks, or at least two value registers (10, 11), which are connected to an output of the evaluating unit (14) and of the graduation marks counter (6) in each case and are constructed, and/or provided with a consistency control system (12), for the consistent telescoping of binary values.

## Revendications

1. Procédé pour mesurer la position absolue ($\alpha$) du support de repères de division (1), mobile et cyclique, d'un codeur de position incrémental ou d'un synchro transmetteur, à l'intérieur de et/ou relativement à l'un de ses segments de division (3), qui sont formés et/ou délimités périodiquement par les repères de division (2) sur le support (1), à l'aide de deux organes de lecture (4) qui sont disposés en des points fixes en regard du support (1) et sont sensibles aux repères de division et qui sont positionnés suivant un écartement mutuel qui, rapporté à la longueur ou au pourtour du segment (3), est tel qu'ils délivrent deux signaux de mesure (x, y) sous forme d'un sinus et d'un cosinus, qui sont évalués sur la base de la fonction arc tangente pour la détermination de la position absolue ($\alpha$), étant précisé que pour la correction de l'évaluation vis-à-vis de perturbations et d'imprécisions dans le codeur de position, on utilise les valeurs ou les composantes d'un vecteur (X0, Y0, Xc, Yc, Xd, Yd), identifiant le processus de mesure, de paramètres d'un modèle mathématique (16) du processus de mesure, lequel vecteur de paramètres est en permanence redéfini pendant l'exécution continue de la mesure, d'après des critères d'optimisation prédéterminés, caractérisé en ce que, parallèlement à l'exécution continue de la mesure, le modèle mathématique (16), sous forme d'une fonction complexe (Zm) de la position absolue ($\alpha$), est évalué par calcul à partir du processus de mesure et est actualisé en continu à l'aide des valeurs de position corrigées et/ou du vecteur de paramètres (X0, Y0, Xc, Yc, Xd, Yd) et, pour l'optimisation, des valeurs de sortie (Xm, Ym, Zm) du modèle mathématique (16) sont comparées aux signaux de mesure (x, y) issus des organes de lecture, les critères d'optimisation incluant une règle de calcul d'adaptation, au moyen de laquelle le vecteur de paramètres (X0, Y0, Xc, Yc, Xd, Yd) est en permanence ajusté, c'est-à-dire adapté à l'opération de mesure en cours.

2. Procédé selon la revendication 1, caractérisé en ce que les critères d'optimisation prédéterminés incluent une règle de calcul d'adaptation qui opère selon la méthode du moindre carré ($\varepsilon^2$) et/ou un procédé de mesure de gradients, éventuellement avec une analyse de sensibilité (18), et au moyen de laquelle le vecteur de paramètres (X0, Y0, Xc, Yc, Xd, Yd) est en permanence ajusté et adapté à l'opération de mesure en cours.

3. Procédé selon la revendication 1 ou 2, caractérisé en ce que le résultat comparatif ($\Delta x$, $\Delta y$), le cas échéant conjointement avec la valeur de position absolue corrigée ($\alpha$), est utilisé comme valeur d'entrée pour la règle de calcul d'adaptation.

4. Procédé selon l'une des revendications précédentes, caractérisé en ce que pour l'identification et la modélisation du processus de mesure, des signaux de mesure (x, y) ou au moins de leurs ondes porteuses, on utilise le vecteur de paramètres optimisé (X0, Y0, Xc, Yc, Xd, Yd) et des équations mathématiques, qui sont structurées pour la définition mathématique ($z = x + jy$) d'une ellipse (Zm) ou d'un cercle.

5. Procédé selon la revendication 4, caractérisé en ce que, lors de la détermination de position, les signaux de mesure (x, y) sont, pour la correction de leur évaluation, combinés mathématiquement au vecteur de paramètres (X0, Y0, Xc, Yc, Xd, Yd) et/ou aux équations.

6. Procédé selon la revendication 5, caractérisé en ce qu'à partir des composantes du vecteur de paramètres (X0, Y0, Xc, Yc, Xd, Yd) et à partir de valeurs correspondant aux signaux de mesure (x, y), un système d'équations est établi pour la détermination du sinus et du cosinus de la position absolue, et la valeur de la position absolue ($\alpha$) est déduite par calcul de ces derniers, par l'intermédiaire de la fonction arc tangente.

7. Procédé selon l'une des revendications 4 à 6, caractérisé en ce que, pour la correction de l'évaluation des signaux de mesure, une translation de l'origine des coordonnées cartésiennes jusqu'au centre de l'ellipse (Zm), et/ou une rotation du système d'axes de coordonnées cartésiennes en correspondance avec les axes croisés de l'ellipse (Zm), et/ou une égalisation des axes de l'ellipse, l'un par rapport à l'autre, en vue de la formation d'un cercle, sont respectivement effectuées par l'intermédiaire de transformations mathématiques et/ou d'une combinaison des paramètres (Zm, Z0) de l'ellipse avec les signaux de mesure (x, y).

8. Dispositif pour la mesure de la position absolue du support de repères de division (1), mobile et cyclique, d'un codeur de position incrémental ou d'un synchro transmetteur, à l'intérieur de et/ou relativement à l'un de ses segments de division (3), qui sont formés et/ou délimités périodiquement sur le support (1) par les repères de division (2), comprenant deux organes de lecture (4) qui sont disposés en des points fixes en regard du support (1) et sont sensibles aux repères de division (2) et qui sont positionnés suivant un écartement mutuel qui, rapporté à la longueur ou au pourtour du segment (3), est tel que deux signaux de mesure (x, y) sous forme d'un sinus et d'un cosinus apparaissent sur les sorties des organes de lecture (4), et comprenant un système de calcul (13) qui comporte une unité d'évaluation (14) recevant les signaux de mesure (x, y), dans laquelle ceux-ci peuvent être pris en compte pour la détermination de la position absolue ($\alpha$), sur la base de la fonction arc tangente, caractérisé en ce que le système de calcul comporte une unité d'adaptation (15x, 15y, 16, 17, 18, 19, 20, 21) qui, côté entrée, est en liaison avec les signaux de mesure (x, y), en parallèle avec l'unité d'évaluation (14), et qui, côté sortie, est reliée à l'unité d'évaluation (14) en vue de la transmission d'un vecteur de paramètres (X0, Y0, Xc, Yc, Xd, Yd), lequel peut être généré, selon une règle de calcul d'adaptation mise en oeuvre dans l'unité d'adaptation, en fonction des signaux de mesure (x, y) et du signal de position absolue ($\alpha$) déterminé par l'unité d'évaluation, et en ce que, dans l'unité d'évaluation (14), le vecteur de paramètres (X0, Y0, Xc, Yc, Xd, Yd) peut, selon une règle de calcul de correction, être combiné aux signaux de mesure (x, y).

9. Dispositif selon la revendication 8, caractérisé en ce que dans l'unité d'adaptation (15x, 15y, 16, 17, 18, 19, 20, 21), est mis en oeuvre un modèle de calcul paramétré (16) qui est couplé, côté entrée, à la sortie de l'unité d'évaluation (14) et au vecteur de paramètres (X0, Y0, Xc, Yc, Xd, Yd) en vue du réajustement de ses paramètres et qui est configuré pour remodéliser, par le calcul, le processus de mesure de position, en fonction du signal de position

absolue corrigé ($\alpha$).

**10.** Dispositif selon la revendication 9, caractérisé par un étage comparateur (15x, 15y) qui est relié à la sortie du modèle de calcul (16) et à la sortie (x, y) du codeur de position, en vue de la formation de signaux d'écart et/ou de signaux d'erreur ($\Delta$x, $\Delta$y; Ex, Ey).

**11.** Dispositif selon la revendication 10, caractérisé en ce qu'en aval de l'étage comparateur (15x, 15y) est implanté un étage de multiplication ou un étage amplificateur (17).

**12.** Dispositif selon l'une des revendications 8 à 11, caractérisé en ce que l'unité d'adaptation (15x, 15y, 16, 17, 18, 19, 20, 21) comporte un module de calcul d'optimisation (18) qui, éventuellement de façon indirecte, est couplé, côté entrée, aux signaux de mesure (x, y) et/ou au signal de position absolue corrigé ($\alpha$) et, côté sortie, à l'unité d'évaluation (14), et dans lequel une règle de calcul d'optimisation est mise en oeuvre.

**13.** Dispositif selon la revendication 12 et l'une des revendications 10 ou 11, caractérisé en ce que le module de calcul d'optimisation (18) est relié, côté entrée, à la sortie de l'étage comparateur ou de l'étage de multiplication ou de l'étage amplificateur (17).

**14.** Dispositif selon la revendication 13, caractérisé en ce que, dans le module de calcul d'optimisation (18), un procédé de mesure de gradients ou une ou plusieurs fonctions de sensibilité sont mis en oeuvre en tant que règle de calcul d'optimisation, afin qu'à la sortie du module de calcul d'optimisation (18), un ou plusieurs signaux d'écart ou signaux différentiels (dX0, dY0, dXc, dYc, dXd, dYd) soient présents, et en ce que ceux-ci sont intégrés et/ou sommés dans un étage intégrateur ou sommateur (21), implanté en aval et relié à l'unité d'évaluation (14), pour donner le vecteur de paramètres (X0, Y0, Xc, Yc, Xd, Yd) pour l'unité d'évaluation (14) et/ou le modèle comparatif (16).

**15.** Dispositif selon la revendication 14, caractérisé par un étage passe-bas ou limiteur (20), qui est intercalé entre le module de calcul d'optimisation (18) et l'étage intégrateur ou sommateur (21) ou implanté en aval de ces derniers.

**16.** Dispositif selon l'une des revendications 8 à 15, caractérisé par un compteur de repères de division (6) dont la sortie est couplée à la sortie de l'unité d'évaluation (8; 14), au travers d'une unité de calcul (9), pour l'établissement de la position absolue intégrale.

**17.** Dispositif selon la revendication 16, caractérisé en ce que l'unité de calcul (9) comporte un élément sommateur de la position absolue corrigée ($\alpha$), issue de l'unité d'évaluation (14), et du résultat du comptage du compteur de repères de division (6), et un élément diviseur implanté en aval, réglé sur le nombre total des repères de division, ou au moins deux registres de valeurs (10, 11), qui sont reliés respectivement à une sortie de l'unité d'évaluation (14) et à une sortie du compteur de repères de division (6) et qui sont configurés pour l'insertion consistante, l'une dans l'autre, de valeurs binaires et/ou pourvus d'une commande de consistance (12).

FIG. 1

Meßsignal: $z = x + jy$

14

$$a = \arctan \frac{(Xc+Xd)(Y-Y0)-(Yc+Yd)(X-X0)}{(Xc-Xd)(X-X0)+(Yc-Yd)(Y-Y0)}$$

$\alpha$

13

16

$$(Zm = Z0 + Zc*e^{ja} + Zd*e^{-ja})$$
$$Xm = X0 + (Xc+Xd)*\cos a - (Yc-Yd)*\sin a$$
$$Ym = Y0 + (Xc-Xd)*\sin a + (Yc+Yd)*\cos a$$

$\cos a$
$\sin a$

19

$a$

$\cos a$
$\sin a$

$Xm$     $Ym$

15x     15y

$\Delta x = x - Xm$     $\Delta y = y - Ym$

$Ex = \Delta x * K$

$$* K$$

17

$Ey = \Delta y * K$

$\cos a$
$\sin a$

18     20     21

$$\begin{bmatrix} 1 & 0 \\ 0 & 1 \\ \cos a & \sin a \\ \cos a & -\sin a \\ -\sin a & \cos a \\ \sin a & \cos a \end{bmatrix} * \begin{bmatrix} Ex \\ Ey \end{bmatrix}$$

dX0 → X0
dY0 → Y0
dXc → Xc
dXd → Xd
dYc → Yc
dYd → Yd

Anfangsbedingungen:
$X0 = 0$; $Y0 = 0$;
$Xc = 1$; $Yc = 0$;
$Xd = 0$; $Yd = 0$;

# FIG. 2

FIG. 3

FIG. 4

FIG. 5

FIG. 6